# EUROPÄISCHE PATENTSCHRIFT

(11) **EP 0 810 135 B1**
(45) Veröffentlichungstag und Bekanntmachung des Hinweises auf die Patenterteilung: **06.06.2001**
(21) Anmeldenummer: 97105769.0
(22) Anmeldetag: 08.04.1997
(51) Int. Cl.: B60T 1/06, A01D 69/10

(54) **Antriebsachse einer landwirtschaftlichen Erntemaschine**
Drive axle for agricultural harvesting machine
Axe d'entraînement d'une moissonneuse

(30) Priorität: 11.04.1996 DE 19614324
(43) Veröffentlichungstag der Anmeldung: 03.12.1997
(73) Patentinhaber: SAME DEUTZ-FAHR S.P.A., 24047 Treviglio (Bergamo) (IT)
(72) Erfinder: von Allwörden, Wilhelm, Dipl.-Ing., 89168 Oberstotzingen (DE); Leppat, Frank, 86150 Augsburg (DE)
(74) Vertreter: Quinterno, Giuseppe

(56) Entgegenhaltungen:
- DE-A- 3 738 856
- DE-B- 1 024 375
- DE-C- 825 805
- FR-A- 2 630 681
- GB-A- 2 076 087

## Beschreibung

Die Erfindung betrifft eine Antriebsachse für eine landwirtschaftliche Erntemaschine nach dem Oberbegriff des Anspruchs 1, sowie eine landwirtschaftliche Erntemaschine mit einer derartigen Antriebsachse.

Landwirtschaftliche Erntemaschinen, wie eine bekannte, selbstfahrende Großballenpresse, sind für den Betrieb auf dem Felde für eine maximale Geschwindigkeit von 20 km/h ausgelegt. Sie weisen eine Antriebsachse auf, mit einer Tragachse und außerhalb dieser zwei Antriebswellen, die von einem an der Tragachse befestigten Getriebegehäuse aus zu Radnabengetrieben führen und an denen je eine Bremse befestigt ist, deren Bremsmoment sich am Getriebegehäuse abstützt. Da diese Geräte, insbesondere bei Lohnunternehmern auch größere Entfernungen auf der Straße zurücklegen müssen, ist eine Erhöhung der zulässigen Geschwindigkeit auf 40 km/h erwünscht. Dazu muß die Bremse entsprechend dimensioniert werden.

Es ist deshalb Aufgabe der Erfindung, die Bremse einer selbstfahrenden landwirtschaftlichen Erntemaschine kostengünstig auf die für eine erhöhte Geschwindigkeit erforderliche Wirksamkeit zu bringen.

Die Aufgabe wird mit einer Antriebsachse einer Erntemaschine gelöst, die die Merkmale des Anspruchs 1 aufweist. Die Aufgabe wird außerdem mit einer Erntemaschine gemäß Anspruch 7 gelöst.

Durch die Verdoppelung der Zahl der Bremsen wird die gewünschte Bremsleistung erzielt. Dabei bleibt die ursprüngliche Ausführung der Antriebsachse praktisch unverändert. Der Mehraufwand beschränkt sich im wesentlichen auf das Hinzufügen der beiden weiteren Bremsen, der aber nur für den Fall der erhöhten Geschwindigkeit erforderlich ist. Das Bremsmoment der weiteren Bremsen wird an den feststehenden Teilen der Antriebsachse abgestützt, in dem die feststehenden Teile der weiteren Bremsen entweder mit dem Getriebegehäuse oder der Tragachse oder den Radnabengetriebegehäusen in Wirkverbindung stehen.

Durch eine vorteilhafte Weiterbildung der Erfindung, bei der die weiteren Bremsen in Nähe der Radnaben angeordnet sind, wird erreicht, daß die Zusatzbelastung der Antriebswellen durch das erhöhte Bremsmoment minimiert wird.

Eine vorteilhafte Ausbildung der Erfindung besteht darin, daß alle Betriebsbremsen als Scheibenbremsen ausgebildet sind. Dadurch ist eine hohe Wirksamkeit und Standfestigkeit bei gleichzeitig einfacher Wartung der Bremsanlage sichergestellt.

Es ist von Vorteil, daß erfindungsgemäß die Antriebswellen je dreiteilig ausgebildet und deren Teile durch Vielzahnhülsen verbunden sind. Dadurch werden deren Montage erleichtert und kleine Fluchtungsfehler ausgeglichen.

Von Vorteil ist auch die Weiterbildung der Erfindung, bei der die Bremsscheiben der weiteren Bremsen an modifizierten Vielzahnhülsen befestigt sind. Dadurch muß lediglich eine Vielzahnhülse pro Antriebswelle ausgetauscht werden. Hinzu kommt je eine Konsole an der Tragachse zur Abstützung des Bremsmoments der weiteren Bremsen.

Eine Ausbildung der Erfindung hat den Vorteil, daß alle Bremsen identisch ausgebildet sind. Dadurch wird der Mehraufwand in Anschaffung und Betrieb minimiert.

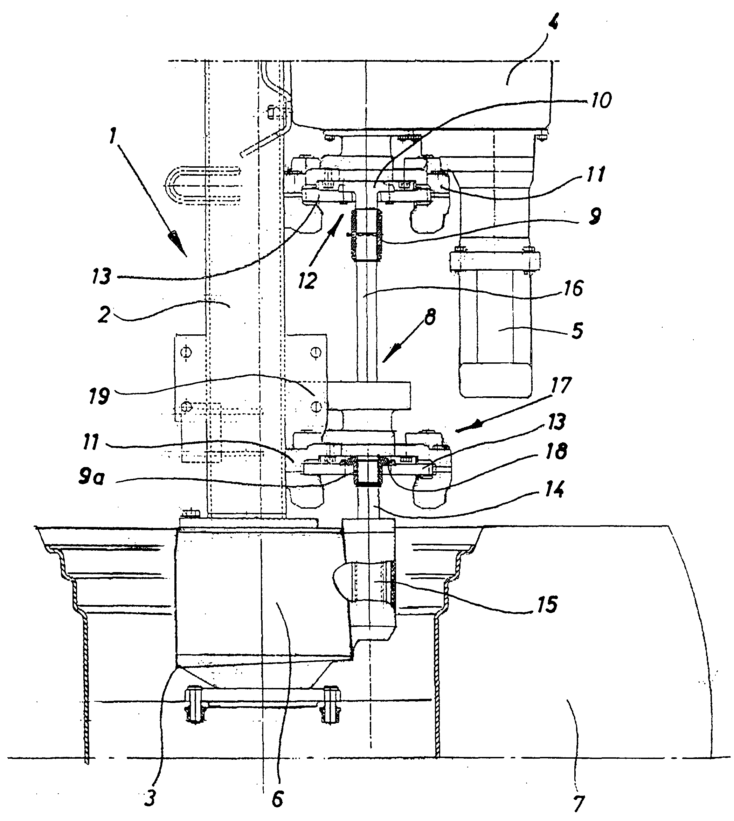

Weitere Merkmale der Erfindung ergeben sich aus der folgenden Beschreibung und der einzigen Figur, auf der eine teilweise geschnittene Hälfte der Antriebsachse dargestellt ist.

Die Antriebsachse 1 weist eine Tragachse 2 mit hohlkastenförmigem Querschnitt auf, an deren beiden Enden je ein Radnabengehäuse 3 und in deren Mitte ein Getriebegehäuse 4 angeflanscht sind. Im Getriebegehäuse 4 befindet sich ein Schalt- und Ausgleichsgetriebe, das von einem Hydrostat 5 angetrieben wird. Im Radnabengehäuse 3 ist ein Radnabengetriebe 6 zum Antrieb der Räder 7 angeordnet.

Getriebegehäuse 4 und Radnabengehäuse 3 sind durch Antriebswellen 8 verbunden. Diese sind wegen der Montage dreiteilig ausgeführt und durch Vielzahnhülsen 9 verbunden. Die Innenteile 10 der Antriebswellen 8 sind im Getriebegehäuse 4 gelagert. Am Getriebegehäuse 4 sind die Bremssättel 11 der Bremsen 12 und an den Innenteilen 10 sind die Bremsscheiben 13 angeflanscht. Die Außenteile 14 der Antriebswellen 8 sind im Radnabengehäuse 3 gelagert. Sie tragen die kleine Verzahnung 15 des Radnabengetriebes 6.

Die Mittelteile 16 der Antriebswellen 8 sind durch Vielzahnhülsen 9 mit den Innenteilen 10 und den Außenteilen 14 der Antriebswellen 8 verbunden. Die Vielzahnhülsen 9 sind bei der Ausführung mit nur zwei Bremsen 12 identisch. Bei der hier dargestellten erfindungsgemäßen Version mit zwei weiteren Bremsen 17 besitzen die äußeren Vielzahnhülsen 9 einen Flansch 18 für die Bremsscheiben 13. Die Bremssättel 11 der weiteren Bremsen 17 sind an Konsolen 19 der Tragachse 2 angeflanscht.

Alle Bremsen 12, 17 sind gleich ausgebildet. Die Version mit vier Bremsen 12, 17 unterscheidet sich von der mit zwei Bremsen 12 lediglich durch zwei modifizierte Vielzahnhülsen 9 und zwei Konsolen 19. Deshalb der Aufwand bezüglich Herstellung, Wartung und Logistik für die Verdoppelung der Bremsleistung gering.

## Patentansprüche

1. Antriebsachse einer landwirtschaftlichen Erntemaschine, insbesondere selbstfahrende Ballenpresse, mit nichtdrehenden Bauteilen, wie eine Tragachse (2) mit daran befestigtem Getriebegehäuse (4) und zwei Radnabengetriebegehäusen (3), sowie drehenden Bauteilen, wie zwei außerhalb der Tragachse (2) angeordnete Antriebswellen (8), aufweist, und mit zwei Bremsen (12), deren Stützteile mit den nichtdrehenden Teilen der Antriebsachse (1) und deren drehende Teile mit den Antriebswellen (8) in Wirkverbindung stehen, dadurch gekennzeichnet, daß zwei weitere Bremsen (17) vorgesehen sind, deren drehende Bauteile mit den Antriebswellen (8) und deren Stützteile mit den nichtdrehenden Bauteilen der Antriebsachse (1) in Wirkverbindung stehen.

2. Antriebsachse nach Anspruch 1, dadurch gekennzeichnet, daß die weiteren Bremsen (17) in Nähe der Radnabengetriebegehäuse (3) angeordnet sind.

3. Antriebsachse nach einem der vorhergehenden Ansprüche, dadurch gekennzeichnet, daß alle Bremsen (12, 17) als Scheibenbremsen ausgebildet sind.

4. Antriebsachse nach einem der vorhergehenden Ansprüche, dadurch gekennzeichnet, daß die Antriebswellen (8) je dreiteilig ausgebildet und deren Teile (10, 14, 16) durch Vielzahnhülsen (9) verbunden sind.

5. Antriebsachse nach einem der vorhergehenden Ansprüche, dadurch gekennzeichnet, daß die Bremsscheiben (13) der weiteren Bremsen (17) an modifizierten Vielzahnhülsen (9a) befestigt sind.

6. Antriebsachse nach einem der vorhergehenden Ansprüche, dadurch gekennzeichnet, daß alle Bremsen (12, 17) identisch ausgebildet sind.

7. Landwirtschaftliche Erntemaschine dadurch gekennzeichnet, daß sie eine Antriebsachse nach einem der vorhergehenden Ansprüche aufweist.

## Claims

1. A drive axle for an agricultural harvester, in particular a self-propelled baling press, with non-rotating components, such as a carrying axle (2) with transmission casing (4) fixed thereto and two wheel hub transmission casings (3), as well as rotating components, such as two drive shafts (8) disposed outside the carrying axle (2), and with two brakes (12), the supporting parts of which are in effective communication with the non-rotating parts of the drive axle (1) and the rotating parts of which are in effective communication with the drive shafts (8),
characterised in that two further brakes (17) are provided, the rotating components of which are in effective communication with the drive shafts (8) and the supporting parts of which are in effective communication with the non-rotating components of the drive axle (1).

2. A drive axle according to Claim 1,
characterised in that the further brakes (17) are disposed in the vicinity of the wheel hub transmission casing (3).

3. A drive axle according to one of the preceding Claims,
characterised in that all brakes (12, 17) are designed as disk brakes.

4. A drive axle according to one of the preceding Claims,
characterised in that the drive shafts (8) are each constructed in three parts and their parts (10, 14, 16) are connected by multi-tooth bushes (9).

5. A drive axle according to one of the preceding Claims,
characterised in that the brake disks (13) of the other brakes (17) are fixed to modified multi-tooth bushes (9a).

6. A drive axle according to one of the preceding Claims,
characterised in that all brakes (12, 17) have an identical construction.

7. An agricultural harvester,
characterised in that it comprises a drive axle according to one of the preceding Claims.

## Revendications

1. Essieu moteur d'une moissonneuse agricole, notamment d'une presse à balles auto-tractée, comportant des composants non rotatifs, tels qu'un essieu porteur (2) équipé d'un carter de transmission (4) fixé sur cet essieu, et de deux carters de transmission (3) de moyeux de roues, ainsi que des composants rotatifs, tels que deux arbres d'entraînement (8) disposés à l'extérieur de l'essieu porteur (2), et comportant deux freins (12) dont les éléments d'appui coopèrent activement avec les parties non rotatives de l'essieu moteur (1) et dont les parties rotatives coopèrent selon une liaison active avec les arbres d'entraînement (8), caractérisé en ce qu'il est prévu deux autres freins (17), dont les composants rotatifs coopèrent de façon active avec les arbres d'entraînement (8) et dont les éléments d'appui coopèrent selon une liaison active avec les composants non rotatifs de l'essieu moteur (1).

2. Essieu moteur selon la revendication 1, caractérisé en ce que les autres freins (17) sont disposés à proximité du carter de transmission (3) du moyeu de roue.

3. Essieu moteur selon l'une des revendications précédentes, caractérisé en ce que tous les freins (12, 17) sont agencés sous la forme de freins à disque.

4. Essieu moteur selon l'une des revendications précédentes, caractérisé en ce que les arbres d'entraînement (8) sont formés chacun de trois éléments et que leurs éléments (10, 14, 16) sont reliés par des douilles (9) à dents multiples.

5. Essieu moteur selon l'une des revendications précédentes, caractérisé en ce que les disques (13) des autres freins (17) sont fixés à des douilles modifiées à dents multiples (9a).

6. Essieu moteur selon l'une des revendications précédentes, caractérisé en ce que tous les freins (12, 17) sont agencés de façon identique.

7. Moissonneuse agricole caractérisée en ce qu'elle comprend un essieu moteur selon l'une des revendications précédentes.
